# EUROPEAN PATENT APPLICATION

(11) **EP 4 729 791 A1**
(43) Date of publication of application: **22.04.2026**
(21) Application number: 24730061.9
(22) Date of filing: 07.05.2024
(51) Int. Cl.: F15B 15/14, B62D 5/12

(54) **HYDRAULIC CYLINDER FOR A STEERING SYSTEM, WITH A PLUNGER ATTACHED BY COLD WORKING**

(30) Priority: 19.06.2023 ES 202331093 U
(71) Applicant: Roquet Hydraulics, S.L., 08551 Tona, Barcelona (ES)
(72) Inventor: BERTRAN SOLDEVILA, Jaume, 08551 TONA Barcelona (ES); PEREZ CARDO, Juan Jose, 08551 TONA Barcelona (ES)
(74) Representative: Durán-Corretjer, S.L.P.
(86) International application number: PCT/ES2024/070276
(87) International publication number: WO 2024/261355

(57) **Abstract**

Hydraulic cylinder that comprises a sleeve, a rod, at least two end covers, at least one fluid inlet, and a plunger coupled to the rod, the plunger and the rod being rigidly connected together, said plunger separating two hydraulic chambers inside the sleeve and being slideable inside the sleeve, in which the rod has a first slot and a second slot in the radial direction thereof and the plunger comprises a first mounting end and a second mounting end, both mounting ends being pressed into respective slots in the rod. The rod has a first closing edge and a second closing edge in the radial direction of said rod that are in contact with an inner surface of the plunger so as to guarantee a fluidtight seal.

## Description

The present invention discloses a hydraulic cylinder. More specifically, the present invention discloses a hydraulic cylinder for a steering system with a plunger fastened by cold working.

A large number of steering systems are known. Said steering systems include power steering systems. Said systems usually include hydraulic systems. Hydraulic systems normally use hydraulic cylinders to move mechanical elements that are connected together, from elements in contact with the environment in which the vehicle is being driven, to steering elements controlled by the driver. Steering systems may be used in any type of vehicle, such as land vehicles, water vehicles or flying vehicles. One of the most widely known systems is the steering system for motor vehicles or land vehicles.

Said steering systems usually comprise a sleeve enveloping a cylinder connected at each end to one of the steering elements, for example a wheel, and have a central plunger that separates the cylinder into two hydraulic chambers and that moves a shaft or rod as a function of the hydraulic pressure applied on each side of the plunger.

A key feature of this type of steering system is the sealing capacity of the plunger between the two hydraulic chambers beside said plunger. Said seal prevents fluid from flowing from one chamber to the other and ensures the correct application of hydraulic pressure, thereby helping the steering system to work correctly. Steering systems that comprise a central plunger that in turn comprises an O-ring seal in contact with the inner wall of the sleeve and that creates the seal between the plunger and the sleeve are known. Despite this, a potential problem with this type of steering system is that fluid can leak between the plunger and the rod. Steering systems that comprise another O-ring seal located in a recess in a central portion of the rod are also known, said seal being in contact with the rod and plunger to create a complete seal between the two hydraulic chambers on each side of the plunger. In high-load, low-speed motor vehicles such as tractors, the steering is more rigid and crude, which results in a greater accumulation of stresses in the movable rod or shaft receiving these stresses, which can cause said rod to break.

The present invention discloses a steering system that comprises a cylinder, which in turn comprises a sleeve, a rod and a plunger coupled to the rod. The plunger and the rod are rigidly connected together. The plunger is slideable inside the sleeve. The rod has a first slot and a second slot in the radial direction thereof. The two end faces of the plunger comprise a first mounting end and a second mounting end. The two mounting ends are pressed into respective slots in the rod. The rod has a first closing edge and a second closing edge in the radial direction of said rod that are in contact with an inner surface of the plunger so as to guarantee a fluidtight seal.

The presence of the closing edges enables a good seal to be created between an inner surface of the plunger and the rod, preventing fluid from flowing from one chamber to the other. The sealing effect is achieved without having to add another seal between the plunger and the rod, which helps to save material.

Preferably, the surface portion of the rod between the two closing edges is smooth and has no circular slots.

Since there is no need to add said seal between the plunger and the rod, there is also no need to form a recess in the rod to receive said seal. This means that the rod has a uniform section in the zone enveloped by the plunger, which is also the central zone thereof, and consequently the weakest zone, since most of the stresses received by the rod are concentrated therein. This obviates the need for a recess in said zone, which reduces the section and weakens said zone, and for a pressure seal, which adds more stresses to said zone of the rod, thereby preventing the rod from breaking in said zone.

The plunger is preferably ring-shaped.

The plunger preferably tightly envelops the rod.

In consideration of the foregoing, since the central zone of the rod is enveloped by the plunger and is not weakened by the recess, the plunger enveloping the entire perimeter surface of the rod in the central zone acts as a reinforcement, thereby virtually increasing the section of said zone and helping to prevent breakages.

The closing edges are preferably arranged with one in each slot.

When assembling the cylinder, the mounting ends of the plunger are press-fitted into the slots. Pressing or drawing the ends into the slots provides a good fit between the plunger and the rod and performs a coupling function between the two elements. The presence of the edges in said slots causes the mounting ends to adopt the shape and adapt to the profile of the edges, thereby obtaining a clearer contact surface between the plunger and the rod and providing an enhanced coupling function. Fitting the mounting ends in the slots in this manner also ensures that the resultant force on the plunger caused by the pressure of the fluid not only causes a sliding pushing force between the plunger and the rod, but also exerts a narrowing pressure on the mounting ends against the slots, such as to compensate said pushing force to some degree, and pressing the plunger further into the rod.

The closing edges preferably have an angular shape.

The angular shape of said edges clearly delimits the contact surface. The angular shape of the edges provides a marked change of direction, which hinders the flow of any fluid reaching this zone. The angular shape of the edges contributes to the sealing capacity between the plunger and the rod. Furthermore, said angular shape facilitates the shaping and fitting of the plunger about the rod, by having a marked angular profile.

The closing edges preferably have a face in the radial direction of the rod, the surface of which is perpendicular to a direction parallel to the longitudinal axis of the rod.

A face perpendicular to the longitudinal axis of the rod combined with pressing the mounting ends into the slots means that there is a contact surface between the plunger and the rod on said perpendicular face. This contact surface is also perpendicular to the pushing force received by the plunger as a result of the hydraulic pressure, thereby helping to transfer, directly and normally, the pushing force received by the plunger to the rod, causing the rod to slide inside the cylinder. Along with the other factors mentioned above, this helps to prevent unwanted sliding between the plunger and the rod and ensures a good seal between the two.

In an alternative embodiment, the cylinder can be used as a hydraulic cylinder.

Evidently, a cylinder as described above can be used in a steering system or simply as a hydraulic cylinder.

For a better understanding of the present invention, drawings showing a non-limiting example embodiment thereof are attached.
Figure 1 is a cross section view of a cylinder of the steering system according to the invention.
Figure 2 is a detailed view of the plunger and of the edge.
Figure 3 is a cross section view of the pressing of the plunger.
Figure 4 is a detailed view of a broken rod in a steering system in the prior art.

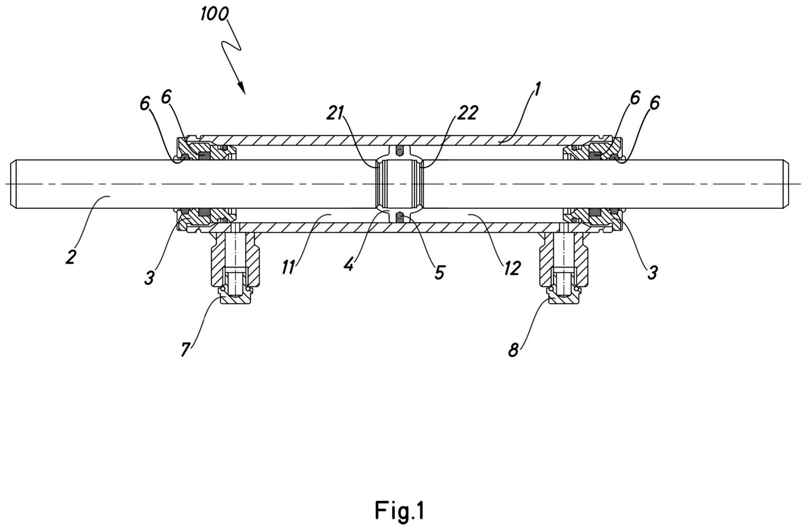

Figure 1 shows a cylinder 100 in cross section, thereby showing the elements inside said cylinder. The figure shows a sleeve 1 and a rod 2 passing therethrough, with a common longitudinal axis. The sleeve has end covers 3 at each end that are each provided with two sealing elements 6 that are in contact with the outer surface of the rod. As shown, the sleeve 1 also contains a plunger 4 that surrounds the rod 2, thereby splitting the internal space delimited by the sleeve 1 and the two end covers 3 thereof into two hydraulic chambers 11 and 12. The assembly also has a sealing element 5 between the plunger 4 and an inner surface of the sleeve 1, to help prevent fluid from flowing between the chambers 11 and 12. This results in the plunger being moved, as a result of pressure differences between the two hydraulic chambers 11 and 12, in the longitudinal direction of the cylinder, thereby also moving the rod rigidly connected thereto. The rod 2 also has slots 21 and 22 about the circular perimeter of the rod 2 at the longitudinal ends of the plunger 4. The sleeve also has two fluid inlets 7 and 8, with the fluid inlet 7 being fluidically connected to the hydraulic chamber 11 and the fluid inlet 8 being fluidically connected to the hydraulic chamber 12.

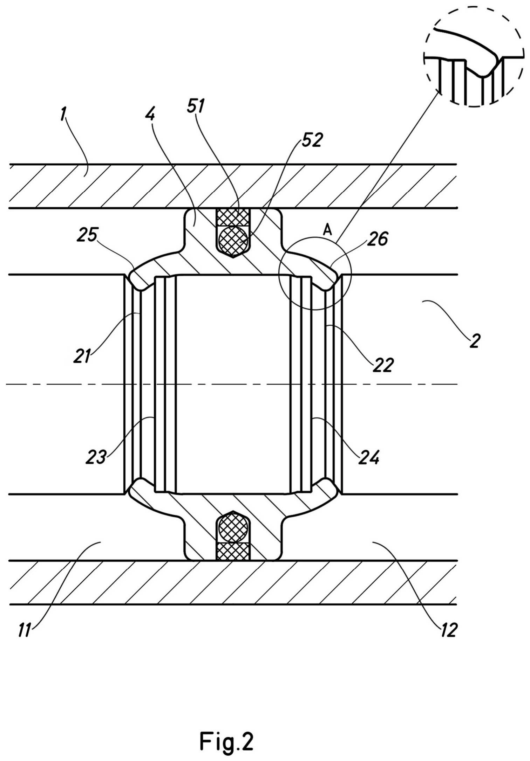

Figure 2 is a magnified and more detailed view of the plunger 4 in Figure 1 and the elements in contact therewith. This figure shows that the slots 21 and 22 have respective closing edges 23 and 24. Each closing edge is intended to improve the seal between the plunger 4 and the rod 2 so as to prevent the fluid in each hydraulic chamber 11 and 12 from flowing into the other chamber between said elements, which are constrained to move together. Furthermore, the sealing element 5 in Figure 1 is made up of two sealing elements 51 and 52, with the sealing element 51 being the outermost element in contact with the inner surface of the sleeve 1 and being ring-shaped, and the sealing element 52 being the inner element and being positioned between said element 51 and the plunger **4,** and is torus-shaped. Apart from this example, other configurations for said sealing elements are possible, both in terms of form and number. This figure also shows that the plunger has two mounting ends 25 and 26 at the longitudinal ends thereof, which fit into the slots 21 and 22 respectively. Furthermore, the presence of the closing edges 23 and 24 in the slots 21 and 22 provides a markedly angular fit, which improves the sealing function between the plunger 4 and the rod 2.

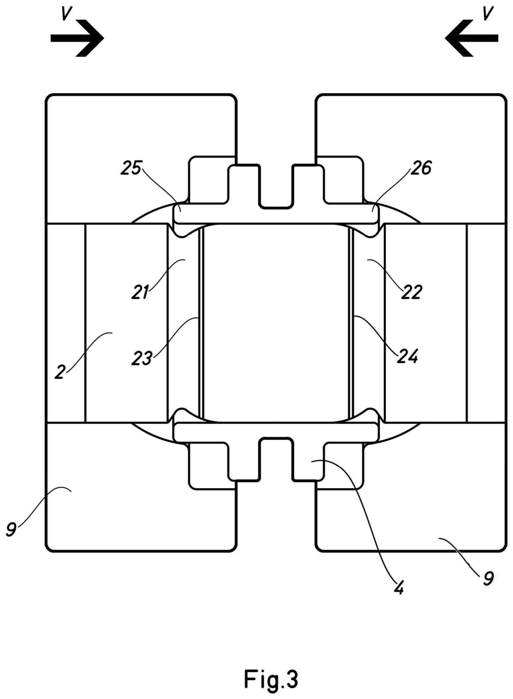

Figure 3 shows the process of pressing the plunger 4 and the rod 2 together. The figure shows the plunger 4 positioned about the rod 2 with a funnel-shaped press die 9 at each of the mounting ends 25, 26 thereof, such that the rod 2 also passes through the die 9. When the dies are moved towards each other in the direction V, the funnel shape of each die 9 causes the mounting ends 25 and 26 of the plunger 4 to be pressed about the slots 21 and 22 and to adjust to the shape and size thereof, including the closing edges 23 and 24 in the slots 21 and 22. This provides a good fit and a good seal between the plunger 4 and the rod 2 in a single step, ensuring that the two elements are rigidly connected together.

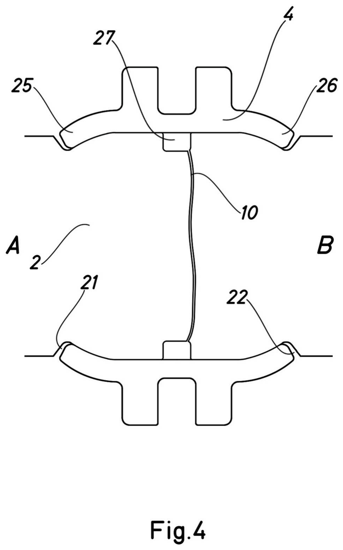

Figure 4 shows an embodiment from the prior art of an assembly comprising a plunger 4 and a rod 2 that are rigidly connected together and that also have slots 21 and 22, with no closing edges, and mounting ends 25 and 26 fitted into said slots, but that also have a perimeter recess 27 in a central portion of the rod 2. A sealing element (not shown, to enable the recess to be clearly seen) is positioned in said recess 27 to provide the seal between the rod 2 and the plunger 4. The presence of said recess 27 weakens the central zone of the rod, where most of the rotary bending stresses are concentrated. These types of cylinders often break for this reason. This figure shows such a break 10 in the rod 2, which is split into two parts A and B where the section of the rod is narrowest, i.e. the central part with the recess 27 in which the sealing element is positioned.

Although the invention has been described and illustrated using representative examples, it should be understood that such an example embodiment in no way limits the present invention, and any variations included, directly or by way of equivalence, in the attached claims should be considered to be included within the scope of the present invention.

## Claims

1. Hydraulic cylinder that comprises a sleeve, a rod, at least two end covers, at least one fluid inlet, and a plunger coupled to the rod, the plunger and the rod being rigidly connected together, said plunger separating two hydraulic chambers inside the sleeve and being slideable inside the sleeve, in which the rod has a first slot and a second slot in the radial direction thereof and the plunger comprises a first mounting end and a second mounting end, both mounting ends being pressed into respective slots in the rod, **characterized in that** the rod has a first closing edge and a second closing edge in the radial direction of said rod that are in contact with an inner surface of the plunger so as to guarantee a fluidtight seal.

2. Cylinder according to the preceding claim, **characterized in that** the surface portion of the rod between the two closing edges is smooth and has no circular slots.

3. Cylinder according to the preceding claim, **characterized in that** the plunger is ring-shaped.

4. Cylinder according to any of the preceding claims, **characterized in that** the plunger tightly envelops the rod.

5. Cylinder according to any of the preceding claims, **characterized in that** the closing edges are arranged with one in each slot.

6. Cylinder according to any of the preceding claims, **characterized in that** said closing edges have an angular shape.

7. Cylinder according to any of the preceding claims, **characterized in that** the closing edges have a face in the radial direction of the rod, the surface of which is perpendicular to a direction parallel to the longitudinal axis of the rod.

8. Steering system that comprises a cylinder according to any of the preceding claims.

9. Use of a cylinder according to any of the preceding claims in a steering system.
